Europäisches Patentamt

European Patent Office

Office européen des brevets

(11) Veröffentlichungsnummer: **0 023 589**
A1

(12) # EUROPÄISCHE PATENTANMELDUNG

(21) Anmeldenummer: 80103880.3

(51) Int. Cl.³: **B 29 C 27/06**

(22) Anmeldetag: 08.07.80

(30) Priorität: 11.07.79 DK 2915/79

(43) Veröffentlichungstag der Anmeldung: 11.02.81
Patentblatt 81/6

(84) Benannte Vertragsstaaten: **AT BE CH DE FR GB LI NL SE**

(71) Anmelder: **Rockwool International A/S, 501, Hovedgaden, DK-2640 Hedehusene (DK)**

(72) Erfinder: **Johansen, Erik, Lindevej 1, DK-4622 Havdrup (DK)**

(74) Vertreter: **Köhne, Friedrich, Dipl.-Ing., Postfach 250265 Lothringer Strasse 81, D-5000 Köln 1 (DE)**

(54) Vorrichtung zum Zusammenschweissen von zwei Kunststoffolien.

(57) Bei Vorrichtungen zum Zusammenschweissen von zwei Kunststoffolien (6, 7), insbesondere zum Herstellen von Schweissnähten, werden die Folien zwischen zwei Schweisswerkzeugen (1, 2) eingeklemmt. Eines der beiden Schweisswerkzeuge ist mit Heizmitteln ausgestattet. Um die Vorrichtung unabhängig von Nachjustierungen bzw. Einstellvorgängen für Unterschiede in der Dicke der Folien zu machen, sind die Heizmittel so angeordnet und ausgestaltet, dass das beheizte Schweisswerkzeug im wesentlichen auf gleichmässiger Temperatur gehalten wird. Das andere Schweisswerkzeug (2) ist mit einem Thermoelement (13) versehen, welches bewirkt, dass das Einklemmen der Kunststoffolien zwischen den Schweisswerkzeugen aufgehoben wird, wenn eine vorbestimmte Temperatur erreicht ist.

- 1 -

Vorrichtung zum Zusammenschweißen von zwei
Kunststoffolien.

Die Erfindung bezieht sich auf eine Vorrichtung zum
Zusammenschweißen von zwei Kunststoffolien, welche
zwei Schweißwerkzeuge aufweist, die derart beweglich gehalten sind, daß die Folien zwischen ihnen
in dem Bereich einklemmbar sind, in welchem die
Schweißung vorgesehen ist, wobei mindestens ein
Schweißwerkzeug mit Heizmitteln versehen ist, durch
welche die Hitze für die Schweißung zugeführt wird.

Beim Nahtschweißen von Kunststoffolien ist es bekannt, Werkzeuge vorzusehen, zwischen welchen die
Folien während des Schweißvorganges zusammengeklemmt werden, und zwar mit Hilfe eines Bandes, das
durch das Band durchlaufenden elektrischen Strom
erhitzt wird. Diese elektrisch beheizten Bänder
sind zwar im Hinblick auf den Energieverbrauch
wirtschaftlich, jedoch unter dem Gesichtspunkt der
Haltbarkeit und der Kontrolle bzw. des Aussehens
der hergestellten Schweißnähte sind die Bänder
nicht wirtschaftlich, wenn gleichmäßige Nahtschweißungen verlangt werden, vor allem weil
Knicke in den Bändern leicht eintreten können und

- 2 -

diese Knicke dann Unterschiede in der Temperatur
entlang des betreffenden Bandes verursachen können.

Um diese Nachteile zu vermeiden, werden massive
Schweißwerkzeuge im ganzen mittels elektrischer
Heizung erhitzt. Diese Schweißwerkzeuge wurden
mit Erfolg benutzt. Bei diesem Werkzeugtyp sollte
jedoch die Temperatur konstant gehalten werden,
um eine gleichmäßige Schweißung herbeizuführen.
Da jedoch in der Praxis Änderungen des Produktionsdurchsatzes eintreten können, besteht die Gefahr,
daß die Kunststoffolien überhitzt werden, wenn
eines der Schweißwerkzeuge nach einer Reihe von
Schweißungen eine Temperatur erreicht, die über der
gewünschten Normaltemperatur liegt. Andererseits
kann eine unvollständige Schweißung eintreten,
wenn die Hitzezuführung unzureichend ist oder wenn
die Dicke der Folie die normale Foliendicke überschreitet oder wenn eines der Schweißwerkzeuge
eine Temperatur aufweist, welche unterhalb des
normalen Temperaturbereiches liegt, was z.B. bei
Unterbrechung des Produktionsvorganges eintreten
kann.

Der Erfindung liegt demgegenüber die Aufgabe zugrunde, eine Vorrichtung zu schaffen, bei welcher
die oben erläuterten Nachteile vermieden sind und
welche gleichmäßige, sichere und zuverlässige
Schweißungen gestattet, und zwar sowohl, wenn die
Vorrichtung für Serien von Schweißungen in schneller Aufeinanderfolge verwendet wird als auch nach
Stillstand der Maschine. Aufgabe der Erfindung ist
ferner, ein Nachjustieren bzw. Einstellen der Vor-

- 3 -

richtung zu vermeiden, wenn Folien unterschiedlicher Dicke geschweißt werden sollen.

Die gestellte Aufgabe wird erfindungsgemäß dadurch gelöst, daß die Heizmittel derart ausgestaltet sind, daß ein Schweißwerkzeug auf eine im wesentlichen gleichmäßige Temperatur erhitzt ist, und daß das andere Schweißwerkzeug mit einem Thermoelement versehen ist, welches zum Registrieren der Temperatur der Kunststoffolien und bei Erreichen einer vorbestimmten Temperatur zum Entlasten der Schweißwerkzeuge eingerichtet ist.

Durch die erfindungsgemäße Vorrichtung wird erreicht, daß die Zeit für die jeweilige Schweißung in Übereinstimmung damit bestimmt wird, daß die vorausbestimmte Temperatur erreicht wird, die ihrerseits einer vollständigen Schweißung auf der Oberfläche der Folien entspricht, und zwar auf der Oberfläche, die sich auf der abliegenden Seite von dem beheizten Schweißwerkzeug befindet. Auf diese Weise ist eine vollständige Schweißung gesichert und es ist weiterhin kein Nachjustieren bzw. Einstellen der Vorrichtung in bezug auf die Dicke der Folie erforderlich. Über einen weiten Bereich ist die Vorrichtung außerdem nicht empfindlich in bezug auf Änderungen der Temperatur des erhitzten Schweißwerkzeuges, wodurch die Heizmittel einfach ausgeführt und installiert sowie gewartet werden können.

In der Zeichnung ist ein Ausführungsbeispiel der Erfindung im Schema dargestellt, und zwar zeigen

- 4 -

Figur 1 einen Vertikalschnitt durch
zwei Schweißwerkzeuge der erfindungsgemäßen Vorrichtung und
Figur 2 eine perspektivische Teilansicht eines Schweißwerkzeuges.

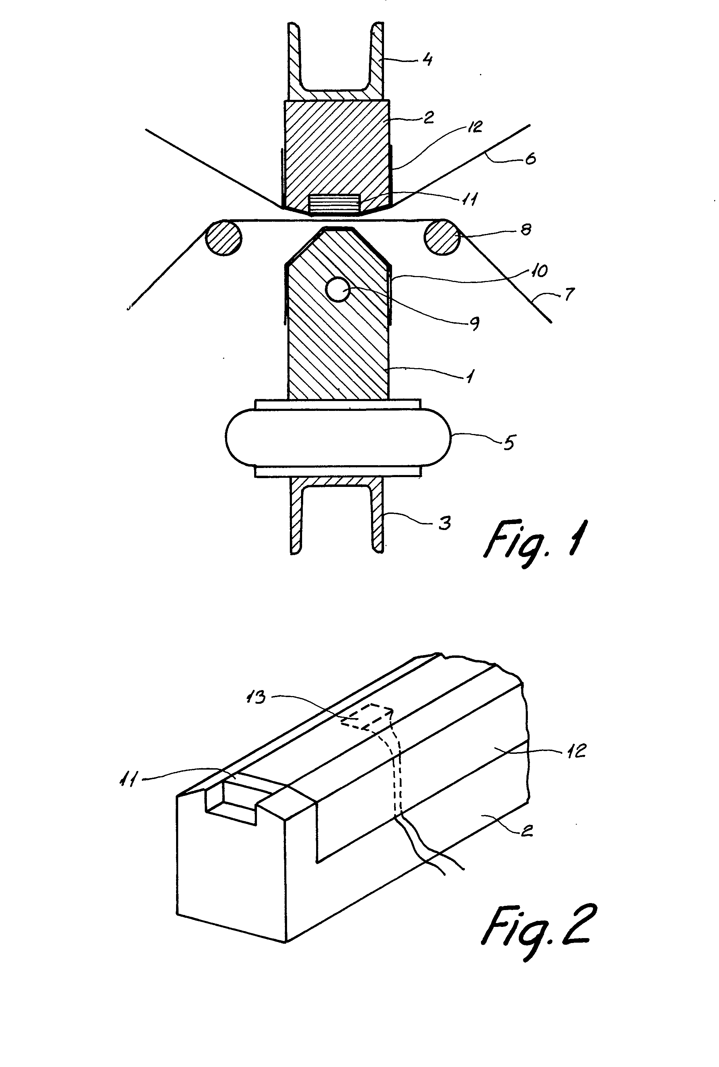

Die Vorrichtung zum Zusammenschweißen von zwei
Kunststoffolien umfaßt im wesentlichen, wie Figur
1 veranschaulicht, ein beheiztes balkenförmiges
Schweißwerkzeug 1 und ein nicht beheiztes balkenförmiges Schweißwerkzeug 2. Beide Schweißwerkzeuge
sind in einem Gestell angeordnet, von welchem nur
die Bauteile 3, 4 dargestellt sind, die zur Halterung der Schweißwerkzeuge dienen. Die Anordnung
der Schweißwerkzeuge ist so getroffen, daß die
Schweißwerkzeuge während des Schweißvorganges aufeinander bewegt werden, wobei die zu schweißenden
Kunststoffolien zwischen den Schweißwerkzeugen eingeklemmt werden. Die Bewegung kann beispielsweise,
wie in Figur 1 dargestellt ist, durch Anordnung des
unteren Schweißwerkzeuges auf einem pneumatischen
Balg 5 oder auf einer Druckdose oder auf andere
geeignete Weise vorgenommen werden. Die Kunststofffolien mit dem Bezugszeichen 6 und 7 werden in
einer Lage mit Abstand voneinander zwischen die
Schweißwerkzeuge 1 und 2 eingeführt. Um zu vermeiden, daß die Folien vorzeitig in eine ungewünschte Berührung mit dem beheizten Schweißwerkzeug 1
gelangen, kann ein Rollenpaar 8 etwas oberhalb und
in paralleler Ebene zu dem Schweißwerkzeug 1 angeordnet werden. Das Schweißwerkzeug 1 ist beispielsweise mit einer elektrischen Heizung 9 ausgestattet,
die das Werkzeug im wesentlichen auf einer gleich-

- 5 -

mäßigen Temperatur hält, und zwar auf einer Temperatur, die etwas höher als die Schweißtemperatur der Kunststoffolie liegt, jedoch etwas niedriger als die Maximaltemperatur, die von einer Abdeckung 10 ertragen wird, die ihrerseits verhindert, daß die Kunststoffolie an dem Schweißwerkzeug anklebt.

In dem anderen Schweißwerkzeug 2 ist ein Streifen aus elastischem Material, beispielsweise Silikongummi, eingesetzt, welcher dazu dient, die Unterschiede in der Dicke der Kunststoffolien 6 und 7 auszugleichen und welcher außerdem einen schnellen Durchgang der Hitze aus dem Schweißpunkt oder aus dem zu schweißenden Bereich verhindert. Das zweite Schweißwerkzeug 2 ist ebenfalls mit einer Abdeckung 12 beispielsweise aus Teflon ausgestattet, um ein Ankleben der Kunststoffolie an dem Schweißwerkzeug zu verhindern.

In Figur 2 ist das obere Schweißwerkzeug 2 zu einem Teil in perspektivischer Darstellung gezeichnet, und zwar der Deutlichkeit halber gegenüber Figur 1 um 180° umgedreht. Unter der Abdeckung 12 ist ein Thermoelement 13 angeordnet, dessen elektrische Anschlüsse mit Steuerungsmitteln verbunden sind, die ihrerseits mit der Vorrichtung zusammenarbeiten, die für das Bewegen der Schweißwerkzeuge zueinander und wieder voneinander bestimmt sind. Die Vorrichtung arbeitet in folgender Weise. Nachdem die zusammen zu schweißenden Folien zwischen die Schweißwerkzeuge gebracht sind, werden die Schweißwerkzeuge aufeinander zu bewegt, so daß die Folien zwischen ihnen eingeklemmt werden. Aufgrund der hohen Temperatur des beheizten Schweißwerk-

- 6 -

zeuges werden die Folien bis auf ihre Schmelztemperatur erhitzt, so daß die Folien miteinander
verschmelzen. Gleichzeitig steigt die Temperatur
in dem Thermoelement an. Wenn diese Temperatur in
dem Thermoelement eine Höhe erreicht hat, die durch
vorhergehende Versuche mit verschieden dicken Kunststoffolien und verschiedenen Sorten von Kunststoff
bestimmt und festgelegt worden ist - eine typische
Temperatur ist die von 85° C - wird das Zusammenklemmen der Kunststoffolien aufgehoben. Die Schweißnaht ist auf diese Weise fertiggestellt.

Die Vorrichtung kann auch mit Schweißwerkzeugen
ausgestattet sein, die eine solche Form haben, daß
gleichzeitig zwei mit Abstand voneinander parallel
verlaufende Schweißnähte der Folien ausgeführt
werden können. In diesem Falle kann die Vorrichtung
auch mit an sich bekannten Schneidvorrichtungen
versehen sein, die die Folien zwischen den beiden
Schweißnähten durchschneiden.

- 1 -

Patentanspruch:

1. Vorrichtung zum Zusammenschweißen von zwei Kunststoffolien, welche zwei Schweißwerkzeuge aufweist, die derart beweglich gehalten sind, daß die Folien zwischen ihnen in dem Bereich einklemmbar sind, in welchem die Schweißung vorgesehen ist, wobei mindestens ein Schweißwerkzeug mit Heizmitteln versehen ist, durch welche die Hitze für die Schweißung zugeführt wird,
dadurch gekennzeichnet,
daß die Heizmittel derart ausgestaltet sind, daß ein Schweißwerkzeug auf eine im wesentlichen gleichmäßige Temperatur erhitzt ist, und daß das andere Schweißwerkzeug mit einem Thermoelement versehen ist, welches zum Registrieren der Temperatur der Kunststoffolien und bei Erreichen einer vorbestimmten Temperatur zum Entlasten der Schweißwerkzeuge eingerichtet ist.

*Fig. 1*

*Fig. 2*

**Europäisches Patentamt**

**EUROPÄISCHER RECHERCHENBERICHT**

0023589

EP 80 10 3880.3

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.3) |
|---|---|---|---|
| X | DE - U - 7 025 999 (LICENTIA PATENT-VERWALTUNGS-GMBH) <br><br> * Seite 2, Zeilen 14 bis 23; Seite 3, Zeile 3 bis Seite 4, Zeile 6; Fig. 3 * | 1 | B 29 C 27/06 |
| A | DE - A - 1 479 314 (GROSSVERSANDHAUS QUELLE) <br><br> * Seite 2, Zeilen 1 bis 19; Fig. 2 * | | |

**RECHERCHIERTE SACHGEBIETE (Int. Cl.3)**

B 29 C 27/04
B 29 C 27/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 23-10-1980 | BRUCK |

EPA form 1503.1   06.78